# EUROPEAN PATENT APPLICATION

(11) **EP 2 036 428 A1**
(43) Date of publication of application: **18.03.2009**
(21) Application number: 08164111.0
(22) Date of filing: 11.09.2008
(51) Int. Cl.: A01G 9/22

(54) **Screen pulling wire fixture**

(30) Priority: 13.09.2007 NL 2000857
(71) Applicant: Blok's Draadvorm Fabriek B.V., 2544 EH 's-Gravenhage (NL)
(72) Inventor: Blok, Johannes Philippus, 2693 AD, 's-Gravenzande (NL)
(74) Representative: van Westenbrugge, Andries

(57) **Abstract**

Screen pulling wire fixture comprising a spring-operated construction between the screen and pulling wire. This spring-operated construction clamps directly to the pulling wire and the screen. Spring coils are mounted between the screen and pulling wire, thus enabling limited relative positioning between the screen and the pulling wire in three directions. This is preferably applied in a horticultural greenhouse construction. The screen can be provided with a spring-operated construction with a spring-action end portion which can be clamped into position and be disposed within a chamber mounted at any position on a section attached to the screen.

## Description

The invention relates to a screen pulling wire fixture comprising a spring construction acting between said screen and said pulling wire, embodied in such a manner as to enable the relative displacement of the pulling wire in relation to the screen in the direction of movement of the pulling wire.

If a number of screens in a greenhouse are opened and closed using the same pulling wire, there is the problem that inaccuracies must be compensated for. This is because it is almost impossible to close all screens of great lengths (100 m and more) simultaneously if these are divided into multiple screen sections. In order to allow for these tolerances, a construction exists in the prior art comprising a guide construction on the front side of the screen in which a slide can move back and forth. This slide has a spring attached on both sides and the springs thus attached come together in a construction attached to the pulling wire.

This is a complicated construction which only enables relative movement of the screen and pulling wire in the direction of movement of the pulling wire. It is therefore an objective of the present invention to provide a screen pulling wire construction which can be applied more universally.

This objective, to provide is achieved in the above described screen pulling wire construction in that said spring construction enables relative displacement of said pulling wire in relation to said screen in a direction perpendicular to the direction of movement of the pulling wire and the plane of said pulling wire.

According to the present invention, for example, this is achieved by enabling the relative displacement of the screen and pulling wire in the horizontal plane when the screen is moved horizontally. In other words, small tolerances in the direction perpendicular to the direction of movement of the pulling wire can be easily compensated for.

According to a specific embodiment of the invention, movements in the third direction between pulling wire and screen are also allowed. More specifically, if the pulling wire is positioned at irregular intervals on a horizontal screen in a vertical direction of the screen, this can be accomodated within the fixture according to the present invention.

The positioning options described hereinbefore can be achieved by means of several conceivable constructions.

According to one specific embodiment of the invention, a resilient wire-coil is applied and mounted, which essentially extends in the plane of the screen. Preferably, one or a multiple of wire-coils are applied and positioned on top of each other or adjacent to each other/within each other. These enable the movements described above in a horizontal direction and more specifically in the opening and closing directions (in the case of a horizontal screen). These movements can be difficult or easy, depending on the number of coils used. However, movements in a lateral direction and back and forth are also possible, wherein through the appropriate choice of rigidity of the wire, the diameter of the spring coils and the number of coils enable the 'spring' characteristics between the screen and pulling wire to be precisely adjusted.

The present invention enables such a large range of movement, particularly in the direction of the pulling wire, that it is no longer necessary to allow for limited slip between the pulling wire and the pulling wire attachment. Such limited slip was often present in the prior art, but due to the twisted nature of the pulling wire, this often resulted in the automatic rotation of the pulling wire attachment, with all resulting adverse effects.

According to one specific embodiment of the invention, the screen fixture of the spring-construction is embodied in such a manner that this can be mounted at any position on the screen without the need to use special tools. To achieve this, the screen fixture of the spring construction comprises a resilient bent leg, the end portion of which is constructed as a spiral coil which can be received within a chamber attached to the screen. This chamber is preferably a chamber extending substantially perpendicular to the pulling wire, thus enabling the screen fixture to be received in the desired position within the chamber. After mounting, the spring construction is rotated somewhat so that clamping occurs.

The invention also relates to a greenhouse construction, wherein the fixture of pulling wire and screen, as described above, is realised. The invention will be described in more detail below referring to the exemplary embodiments shown in the drawing, in which:
Fig. 1 is a schematic view of a greenhouse construction provided with a screen with pulling wire;
Fig. 2 shows detail I from fig. 1
Fig. 3 shows the deflection of the screen pulling wire construction in a first direction;
Fig. 4 shows the deviation of the screen pulling wire construction in a second direction;
Fig. 5 a-c shows an alternative embodiment of the construction described in previous figures.

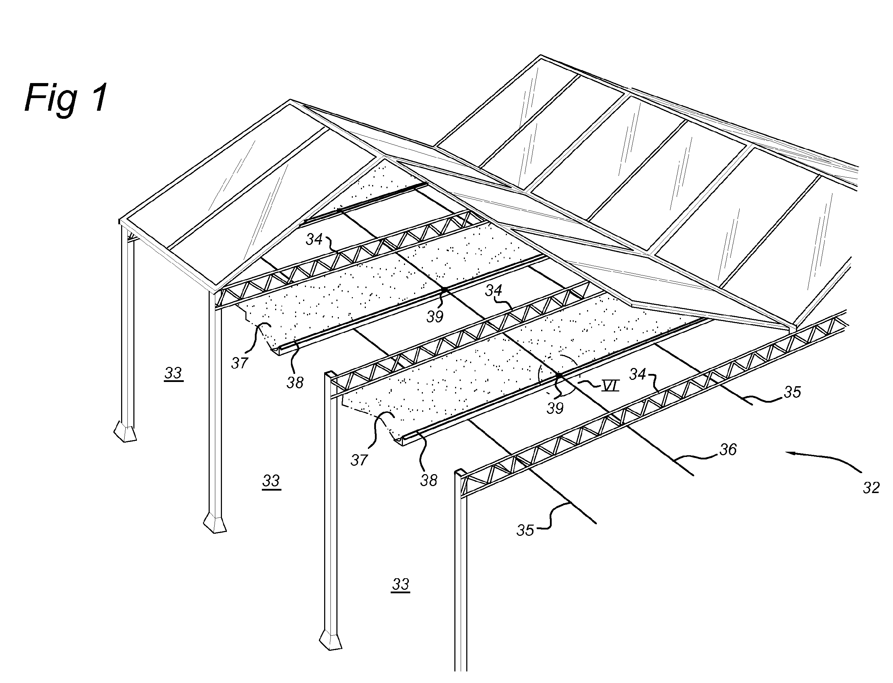

In fig. 1 32 indicates a highly schematic illustration of a greenhouse construction. This comprises a number of sections 33 with their respective traverses 34, between which screens are mounted which can be opened or closed, as desired. These screens are suspended on suspension wires 35 and are operated by means of pulling wire 36. Pulling wire 36 in common for a number of screens, thus enabling the operation thereof with only a single motor. Each screen is attached to the pulling wire at 39 via section 38. This section can be in any shape or form, such as a tube and so forth. It will be understood, that due to the large lengths and variations in temperature and dimensions, it is almost impossible to fully close all screens simultaneously. It is therefore necessary to take steps to enable some degree of movement between the front side 38 of the screen 37 and the pulling wire 36.

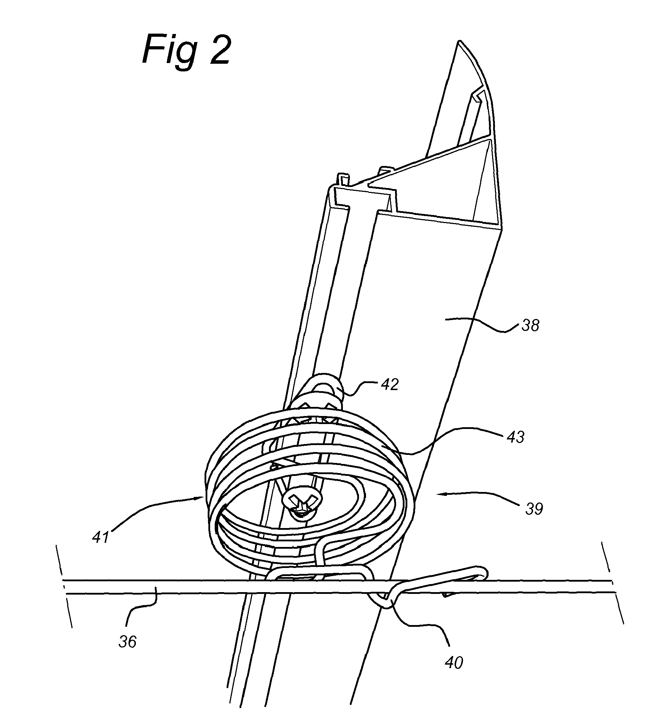

Fig. 2 shows how such a construction can be embodied according to the present invention. The pulling wire 36 is provided with a pulling wire attachment part 40 of the screen pulling wire fixture 39. This can be any wire-clip known in the prior art. Fig. 2 shows a general example, but the previously described clamping construction can also be applied for the respective wire clamp. Part 38 of the screen is a section with chamber which can be accessed from below and in which the screen attachment part can be spring-mounted. This screen attachment part is indicated by 42. A number of coils 42 placed beneath each other extend from between the screen attachment part 42 and the pulling wire atta chment part 40. The screen pulling wire fixture or attachement comprises a single part, in other words, this single part comprises the pulling wire attachment part 40, the connecting part 41 and the screen attachment part 42.

The relative movement of part 3 8 and the pulling wire is enabled by providing a number of coils in connecting part 41. However, because the coils 43 have such a high degree of spring-force, there will always be a pretensioning force present towards the 'ideal' position as shown in Fig. 2.

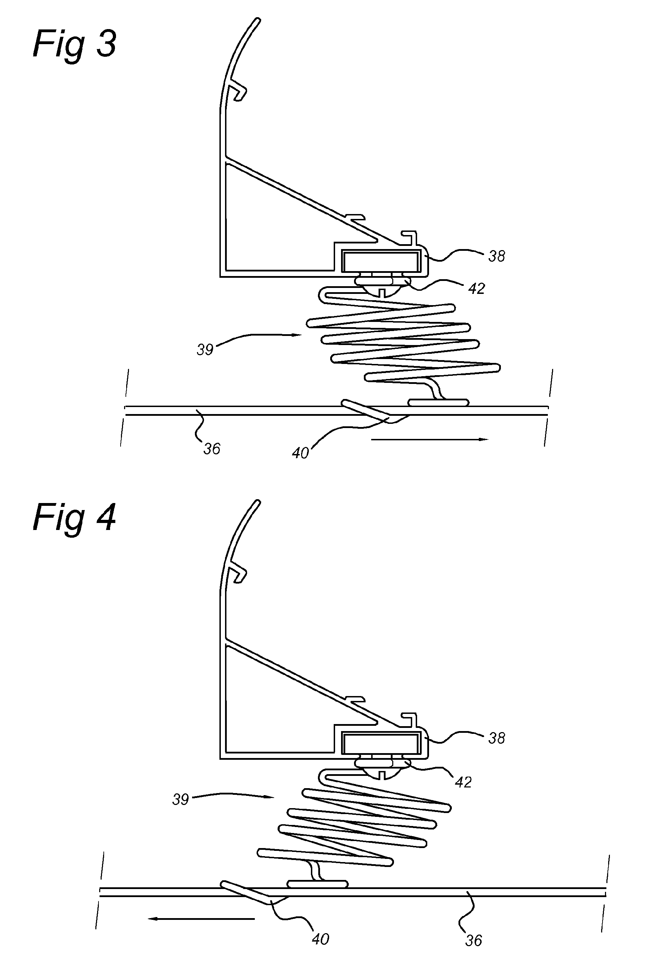

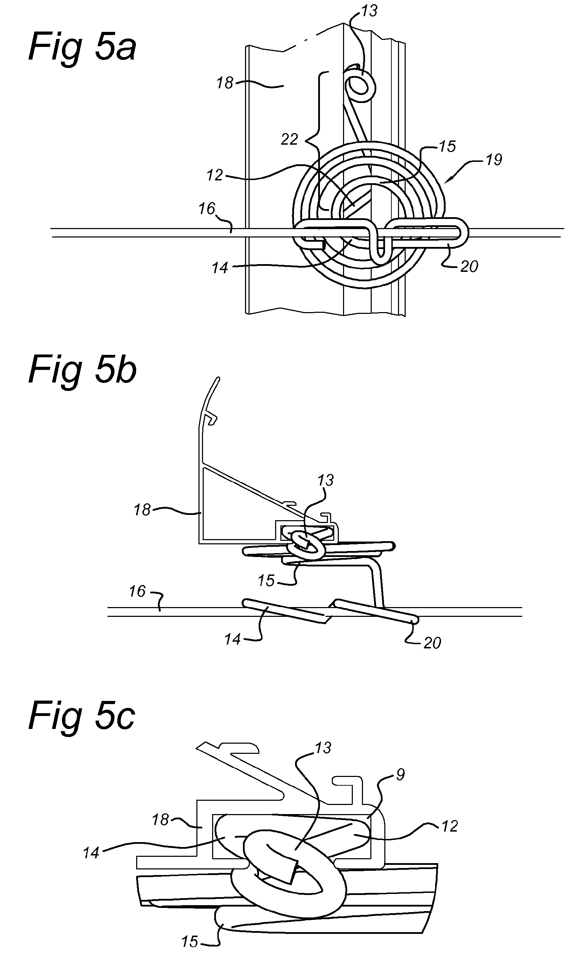

Fig. 3 and 4 show possible deviations of the pulling wire and screen which can be provided by means of the elastic deformation of the spring coils 43. Fig. 5a-c shows an alternative embodiment of the invention.

The screen pulling wire fixture is indicated by 19. The screen pulling wire fixture thereof is indicated by the reference numeral 22 and can be mounted to section 18, whereas the pulling wire attachment part thereof is indicated by 20. The pulling wire is indicated by 16 and the moveable section by 18. As opposed to a previous embodiment, this section 18 is provided with a chamber 9 for incorporating the screen fixture part 22. In this embodiment, the screen fixture part 22 is constructed as a particularly curved part. This enables a clamped engagement with the chamber 9, more specifically with the edges defining the chamber thereof. In this embodiment the spring coils of the fixture lie in one plane.

The screen fixture 22 comprises a zigzag-formed curved part 12 and an end portion 13 constructed as a coil. The tops 14 and 15 of the zigzag-formed curved part are disposed within chamber 9, as shown in fig. 5a-c. The end portion 13 is only partially disposed within chamber 9. This enables the full clamping and closure of part 22 within chamber 9.

This embodiment enables the positioning and locking of the screen fixture part 22 in any position of the section without the need for separate measures to be taken, such as the use of a screwdriver or other tools in order to secure screen fixture part 22.

After the above those skilled in the art will be readily aware of other alternative embodiments of the above described proposals. These lie within the scope of the following claims. Additionally, it will be understood that numerous combinations of the various proposed embodiments are also conceivable.

## Claims

1. Screen pulling wire fixture, comprising a spring construction (19) mounted between the screen (37) and the pulling wire (16, 36), constructed so as to enable the relative displacement of the pulling wire and the screen in the direction of movement of the pulling wire, **characterized in that** the spring construction (19) allows the relative displacement of said pulling wire in relation to the respective screen in a direction perpendicular to the direction of movement of the pulling wire and in the plane of the screen.

2. Fixture according to claim 1, wherein the spring construction enables the relative displacement of said pulling wire in relation to said screen in a direction perpendicular to the direction of movement of the pulling wire and the plane of the pulling wire.

3. Fixture according to claim 1 or 2, comprising a screen fixture (22, 42) and a pulling wire attachment (20, 40) and a spring coil (19, 42) extending there between the spring coil (19, 43) lying substantially in the plane of the pulling wire and said screen.

4. Fixture according to claim 3, wherein the wire coil comprises a number of spring coils (43) positioned on top of each other, wherein an end coil is attached to the screen fixture (22, 24) and an opposing end coil is attached to the pulling wire attachment (2) 40).

5. Fixture according to any of the preceding claims, wherein the pulling wire fixture is constructed for engagement on the pulling wire without stop.

6. Fixture according to any of the preceding claims, wherein the screen fixture (22) is a resilient part for clamped engagement of a section (18) connected to said screen.

7. Fixture according to claim 6, wherein said section (18) is provided with a chamber (19) for receiving said screen fixture (22).

8. Greenhouse construction (32) comprising a positionable screen (37) suspended on guide-wires (35) and operated by means of a pulling wire (16, 36), **characterized in that,** a screen pulling wire fixture is disposed between said screen (37) and pulling wire according to any of the preceding claims.
